(19) Europäisches Patentamt
European Patent Office
Office européen des brevets

(11) Publication number: **0 219 949**
**A2**

(12) # EUROPEAN PATENT APPLICATION

(21) Application number: 86306681.7

(22) Date of filing: 29.08.86

(51) Int.Cl.⁴: C 07 F 7/18

(30) Priority: 15.10.85 US 787227

(43) Date of publication of application: 29.04.87 Bulletin 87/18

(84) Designated Contracting States: DE FR GB

(71) Applicant: DOW CORNING CORPORATION
3901 S. Saginaw Road
Midland Michigan 48640(US)

(72) Inventor: Bajzer, William X.
4201 McKeith Road
Midland Michigan(US)

(72) Inventor: Revis, Anthony
2570 Kirk Point Drive
Midland Michigan(US)

(74) Representative: Laredo, Jack Joseph et al,
Elkington and Fife High Holborn House 52/54 High Holborn
London, WC1V 6SH(GB)

(54) **Preparation of high-purity silyl ketene acetals.**

(57) What is disclosed is a process to facilitate improved recovery of a high-purity silyl ketene acetal, the process comprising a) contacting methacrylic acid or an ester of methacrylic acid with a hydrogen-containing silane material in the presence of an organo complex of rhodium, wherein the hydrogen-containing silane material is in a stoichiometric excess relative to the methacrylic acid or one of its esters; and b) separating and isolating the desired product from the reaction mixture, whereby the desired ketene acetal is obtained essentially free of impurities.

Also disclosed are new compositions in the form of novel silyl ketene acetal compounds.

EP 0 219 949 A2

Croydon Printing Company Ltd

# PREPARATION OF HIGH-PURITY SILYL KETENE ACETALS

This invention relates to a process for preparing and recovering, in high purity, chemical intermediates known as silyl ketene acetals. More specifically, the silyl ketene acetals are the reaction products of a vinylic compound, methacrylic acid or one of its esters, and a hydrogen-containing silane material.

To aid in the understanding of the instant invention, the following chemical definitions and notation will be outlined below. This notation will subsequently be used in the remainder of this specification:

a. Silyl ketene acetal = SKA = 1,4- adduct =

1) $R_aSi[OC=C(CH_3)_2]_{4-a}$ , or

$\quad\quad O$

$\quad\quad (CH_2)_v$

$\quad\quad Z$

$\quad\quad\quad\quad CH_3 \quad CH_3$

2) $[(CH_3)_2C=C-O-Si-]_2O[Si-O]_w$ ,

$\quad\quad O \quad CH_3 \quad CH_3$

$\quad\quad (CH_z)_v$

$\quad\quad Z$

3) $(R^{i}_3Si)_2O(R^{ii}_2SiO)_x(R^{iii}SiO)_y$, or

$\quad\quad\quad\quad OC=C(CH_3)_2$

$\quad\quad\quad\quad O(CH_2)_vZ$

4) $$[(CH_3)_2C{=}C(O(CH_2)_vZ)OSi(CH_3)_2O]_4Si$$

$CH_3$ (above Si); O (below C), $(CH_2)_vZ$; $CH_3$ (below Si)

b. Vinylic compound = methacrylic acid or an ester of methyacrylic acid =

$$CH_2{=}C(CH_3)\overset{O}{\overset{\|}{C}}O(CH_2)_vZ$$

c. Major byproducts

* Carbonyl adduct = CA = 1,2- adduct =

1) $R_aSi[OCH(CH_3)C{=}CH_2]_{4-a}$, or

O (below CH), $(CH_2)_vZ$

2) $[CH_2{=}C(CH_3)CH{-}OSi{-}]_2O[Si{-}O]_w$ ,

$CH_3$ / $CH_3$ (above and below each Si); O (below CH), $(CH_2)_vZ$

3) $(R^i_3Si)_2O(R^{ii}_2SiO)_x[R^{iii}SiO]_y$, or

$OCH(CH_3)C{=}CH_2$ (below Si)

$O(CH_2)_vZ$ (below CH)

$$\begin{array}{l} \qquad\qquad\qquad\qquad CH_3 \\ \text{4)} \quad [CH_2{=}C(CH_3)CHOSiO]_4Si \\ \qquad\qquad\qquad\quad O \quad CH_3 \\ \qquad\qquad\qquad (CH_2)_vZ \end{array}$$

* Beta- or vinyl adduct = VA =

1) $R_aSi[CH_2CH(CH_3)\overset{O}{\overset{\|}{C}}[O(CH_2)_vZ]]_{4-a}$ , or

2) $[[Z(CH_2)_vO]\overset{O}{\overset{\|}{C}}(CH_3)CHCH_2-\underset{CH_3}{\overset{CH_3}{Si}}]_2O(\underset{CH_3}{\overset{CH_3}{Si}}-O)_w$ ,

3) $(R^i_3Si)_2O(R^{ii}_2SiO)_x[R^{iii}SiO]_y$ , or
$CH_2CH(CH_3)\overset{O}{\overset{\|}{C}}[O(CH_2)_vZ]$

4) $[Z(CH_2)_v\overset{O}{\overset{\|}{O}C}(CH_3)CHCH_2\underset{CH_3}{\overset{CH_3}{Si}}O]_4Si$

d. Hydrogen-containing silicon material =

1) $R_aSiH_{4-a}$ , or

2) $(H\underset{CH_3}{\overset{CH_3}{Si}}-)_2O(\underset{CH_3}{\overset{CH_3}{Si}}O)_w$ ,

3) $(R^{i}_{3}Si)_{2}O(R^{ii}_{2}SiO)_{x}(R^{iii}HSiO)_{y}$ , or

$$\begin{array}{l} \quad CH_3 \\ \quad \vert \\ [HSiO]_4Si \\ \quad \vert \\ \quad CH_3 \end{array}$$ 4)

Further details on the chemical structures and notation will be given later in the specification.

The first reference to preparation of silyl ketene acetals was in the late-1950's by Petrov et al., J. Gen. Chem. (USSR), 29(1959), pp. 2896-2899. This reference and most of the other references to the art deal with the chemical species of the general formula,

$$R_3Si[\underset{\vert \atop O(CH_2)_vZ}{OC}=(CH_3)_2] \;,$$

These reactive organosilane intermediates are of interest because of the ability to further react the SKA's to other intermediates which would be difficult to synthesize by other means. A very recent application is the use of the SKA materials as acrylate polymerization initiators. This concept known as Group Transfer Polymerization [GTP] was developed by DuPont and is disclosed in three recent U.S. patents, U.S. 4,414,372, Farnham et al., issued November 8, 1983; U.S. 4,417,034, Webster, issued November 22, 1983; and U.S. 4,508,880, Webster, issued April 2,1985.

Silyl ketene acetals, having the general formula,

$$R_2Si[OC(O(CH_2)_vZ)=(CH_3)_2]_2,$$

are also disclosed in the art. Kita et al., Tetrahedron Letters, 24:12 (1983), pp. 1273-1276, disclose the preparation of several ketene acetal materials. Among these SKA materials are the bifunctional compounds,

$[(CH_3)(CH_3)C=C[O(CH_3)]O]_2Si(CH_3)(CH_3)$,

$[(CH_3)(CH_3)C=C[O(CH_3)]O]_2Si(C_2H_5)(C_2H_5)$,

$[(CH_3)(CH_3)C=C[O(CH_3)]O]_2Si(i\text{-}C_3H_7)(i\text{-}C_3H_7)$, and

$[(CH_3)(CH_3)C=C[O(CH_3)]O]_2Si(CH_3)(C_6H_5)$.

These novel SKA reagents have been shown to be very useful as bifunctional protecting agents for H-acidic materials such as diols, dithiols, diacids, and the like.

Three procedures for preparing silyl ketene acetals from carboxylic acid esters are known in the art. The first general route to SKA's is the reaction of a carboxylic acid ester with an appropriate metal reagent to form a metal enolate ion and subsequent reaction of the enolate ion with an organochlorosilane. Ainsworth et al., J. Organometallic Chem., 46(1972), pp. 59-71, describe the preparation of an SKA via the reaction of carboxylic acid esters with lithium diisopropylamide, followed by reaction with trimethylchlorosilane. Kita et al. in the above cited reference, disclose a similar procedure to prepare the bifunctional SKA's. Brown, J.Org. Chem., 39:9(1974), pp. 1324-1325, describes the preparation of metal enolate ions by reacting potassium hydride in tetrahydrofuran with a carbonyl compound, followed by reaction with excess triethylamine and trimethylchlorosilane.

In a second general procedure, silyl ketene acetals are prepared by the hydrosilation reaction of carboxylic acid esters and triorganosilanes. Petrov et al., J. Gen. Chem. (USSR), 29(1959), pp. 2896-2899, described the platinum-

catalyzed reaction of methylmethacrylate with triethylsilane; the product was mainly the beta- or vinyl adduct (VA) rather than the desired SKA. Ojima et al., J. Organometallic Chem., 111(1976), pp. 43-60, studied the use of tris(triphenylphosphine)rhodium chloride as a catalyst; methacrylate esters and triethylsilane formed mainly the desired SKA with some carbonyl adduct (CA). Ojima et al. include an example in which a crude reaction product is determined to be 92% SKA and 8% CA by gas chromatographic analysis. Ojima et al. make no disclosure of separation and recovery of SKA essentially free of CA.

Howe et al., J. Organometallic Chem., 208(1981), pp. 401-406, and Yoshii et al., Chem. Pharm. Bull., 22(1974), pp. 2767-2769, describe yields of 70-75% SKA from the reaction of $(C_2H_5)_3SiH$ and methylmethacrylate using organophosphorous complexes of rhodium as a catalyst. Howe determined yield by use of gas chromatographic analyses. Nowhere does Howe et al. mention the carbonyl adduct or physical separation and isolation of the desired SKA material. Yoshii et al. indicate that the SKA produced above was recovered by "short-path distillation."

In the instant invention, it was unexpectedly found that for methacrylate materials the carbonyl adduct (CA) was formed along with the desired SKA and that separation of the SKA from CA was not possible by conventional distillation. The very close boiling points of the SKA and CA, estimated at less than 5°C. difference by the results of gas chromatographic and mass spectroscopic analyses, would seem to bear out this finding. Further, during the development of the instant invention, it was unexpectedly found that the use of gas chromatography to analyze for the SKA and CA components in the crude reaction mixture was in itself difficult. The early attempts at gas chromatography resulted in

identification of SKA and CA as a single compound. A special gas chromatographic technique was required to effect resolution of the SKA and CA peaks to facilitate identification. This analytical difficulty may further explain the apparent contradiction between the teachings of Yoshii et al. and the instant invention. Yoshii et al. apparently recovered SKA and CA together and may have identified this mixture as SKA.

In a third procedure, Ishikawa et al. in U.S. 4,482,729, issued November 13, 1984, describe the preparation of a fluoroalkyl silyl ketene acetal by the reaction of a fluorinated carboxylic acid ester with trimethylsilyl trifluoromethanesulfonate.

Preparation of silyl ketene acetals via the metal enolate ion route has several shortcomings compared to the instant invention. First there is the cost of the necessary reactants namely lithium diisopropylamide, potassium hydride, solvents, etc. Additionally, the resultant metal salts formed during the reaction pose a difficult processing step. In combination, the two above shortcomings would result in potentially higher costs to produce the final product.

In regard to the art on use of rhodium catalysts, the references cited teach the use of organophosphorous complexes of rhodium. The instant invention has found unexpectedly that other organo complexes of rhodium such as $RhCl_3.(n\text{-}Bu_2S)_3$ are potential substitutes for the organophosphorous complexes.

A most significant unexpected finding of the instant invention was the discovery that the carbonyl adduct (CA), which boiled very closely to the desired SKA, could be reacted to higher-boiling chemical species by reaction with an excess of the hydrogen-containing silicon material. Ojima et al. indicate that in their preparation of an SKA from the

reaction of $(C_2H_5)_3SiH$ and methylmethacrylate a 10 mole percent excess of the $(C_2H_5)_3SiH$ is employed. This stated excess is below the minimum amount which was found unexpectedly in the instant invention to be needed to react with essentially all of the CA. As is pointed out in the examples, a minimum theoretical amount of excess hydrogen-containing silicon material needed is calculated to be 12 mole percent. The results disclosed by Ojima, further, do not demonstrate the reduction of CA as does the instant invention. This finding in the instant invention allowed the use of conventional separation techniques such as distillation to facilitate what is an extremely difficult separation. This finding further allowed the recovery of very high-purity SKA. Nowhere in the art is there a teaching that conclusively demonstrates the isolation of the desired SKA from a mixture containing both SKA and CA.

Another significant unexpected finding of the instant invention was the discovery that the mode in which the reactants were contacted had a marked effect upon the course of the reaction. It was found that, when a large excess of the hydrogen-containing silicon material was fed to a reactor containing the methacrylic acid or one of its esters, the reaction to form the desired SKA proceeded very slowly relative to the reaction to form the byproducts and significant amounts of byproducts relative to the desired SKA were formed. By adding the hydrogen-containing silicon material to the methacrylate material and organo complex of rhodium in a restricted fashion such that the hydrogen-containing silicon material is allowed to react and not to accumulate until the stoichiometric amount is reached, the reaction rate of the SKA relative to the reaction rates of byproducts can be increased and the reaction favors the

desired SKA. This phenomenon will be further detailed infra and in the examples.

The objective of the instant invention is to provide a process for the preparation and recovery of silyl ketene acetals, said process 1) maximizes conversion of raw materials to the desired SKA, 2) provides a purification and recovery scheme to yield high-purity final SKA product, 3) minimizes complexity of processing, and 4) minimizes the final cost of the desired SKA product.

In accordance with the instant invention, there is provided a process for the manufacture and recovery of high-purity silyl ketene acetal (SKA or 1,4-adduct) of the general formula selected from the group consisting essentially of

(I) $$R_aSi[\underset{\begin{array}{c}|\\ O\\ |\\ (CH_2)_v\\ |\\ Z\end{array}}{OC}=C(CH_3)_2]_{4-a} \quad ;$$

(II) $$[(CH_3)_2C=\underset{\begin{array}{c}|\\ O\\ |\\ (CH_2)_v\\ |\\ Z\end{array}}{C}-O-\overset{\begin{array}{c}CH_3\\ |\end{array}}{\underset{\begin{array}{c}|\\ CH_3\end{array}}{Si}}-]_2O[\overset{\begin{array}{c}CH_3\\ |\end{array}}{\underset{\begin{array}{c}|\\ CH_3\end{array}}{Si}}-O]_w \quad ;$$

(III) $$(R^{i}_3Si)_2O(R^{ii}_2SiO)_x[R^{iii}\underset{|}{Si}O]_y \quad ;$$

$$\left.\begin{array}{l} O\underset{|}{C}=C(CH_3)_2\\ O(CH_2)_vZ \end{array}\right\} Q$$

$$\begin{array}{l} \qquad\qquad\qquad\qquad CH_3 \\ \qquad\qquad\qquad\qquad\ \ | \\ \text{(IV)}\quad [(CH_3)_2C{=}COSiO]_4Si\ ; \\ \qquad\qquad\qquad\quad\ \ |\quad\ | \\ \qquad\qquad\qquad\quad\ \ O\ \ CH_3 \\ \qquad\qquad\qquad\quad\ \ | \\ \qquad\qquad\qquad\ (CH_2)_vZ \end{array}$$

wherein R is selected from the group consisting of alkyl radicals containing 1 to 4 carbon atoms, aryl groups, and alkoxy groups containing 1 to 4 carbon atoms;

<u>a</u> has a value of 0,1,2, or 3;

<u>v</u> in each case has a value of 0, 1, 2, or 3;

<u>w</u> has a value of 0 to 25;

<u>x</u> has a value of 1 to 100;

<u>y</u> has a value of 1 to 35;

<u>Q</u> is $-OC{=}C(CH_3)_2$;
$$\begin{array}{l} \quad | \\ O(CH_2)_vZ \end{array}$$

$R^i$, $R^{ii}$, and $R^{iii}$ are each independently selected from the group consisting of alkyl groups containing 1 to 4 carbon atoms and aryl groups; Z in each case is independently selected from the group consisting of

(i) -H,

(ii) -OH,

(iii) $-SiR^{iv}R^{v}R^{vi}$,
wherein $R^{iv}$, $R^{v}$, and $R^{vi}$ are independently selected from the group consisting of alkyl radicals containing 1 to 4 carbon atoms, aryl groups, and alkoxy groups containing 1 to 4 carbon atoms,

(iv) $-OSiR^{iv}R^{v}R^{vi}$,

(v) $-CH(CH_3)_2$,

(vi) 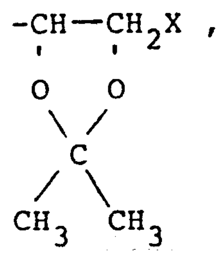

wherein X is hydrogen or $-(CH_2)_{0-5}(CH_3)$,

(vii) $-(CH_2)_bOCH(CH_3)O(CH_2)_cCH_3$,
wherein b and c each have a value of 1 to 4,

(viii) $-Si[O\overset{O}{\overset{\|}{C}}\underset{CH_3}{C}=CH_2]_{3-(d+e+f)}][R_d^{vii}R_e^{viii}R_f^{ix}]$,
wherein $R^{vii}$, $R^{viii}$, and $R^{ix}$ are independently selected from and have the same definition as $R^{iv}$, $R^{v}$, and $R^{vi}$; and wherein d, e, and f each have a value of 0 or 1,

(ix) $-NR^{x}R^{xi}$,
wherein $R^{x}$ and $R^{xi}$ are independently selected from and have the same definition as $R^{iv}$, $R^{v}$, and $R^{vi}$,

(x) -Y,
wherein Y is independently selected from a group consisting of $C_{1-20}$ alkyl, alkenyl, or alkadienyl; $C_{6-20}$ cycloalkyl, aryl, alkaryl, or aralkyl; any of said groups containing one or more ether oxygen atoms within aliphatic segments thereof; and any of

such groups containing one or more functional substituents that are unreactive under polymerizing conditions,

(xi) -N=C=O,

the process comprising the reaction of a vinylic compound with a hydrogen-containing silicon material under certain conditions as will be delineated herein. What is described, therefore, is a process to facilitate recovery of a high-purity silyl ketene acetal, said process comprising (A) contacting a vinylic compound selected from the group consisting of (i) methacrylic acid and (ii) an ester of methacrylic acid of the general chemical formula,

$$CH_2{=}C(CH_3)\overset{O}{\overset{\|}{C}}O(CH_2)_vZ,$$

wherein, v and Z are defined above, with a hydrogen-containing silicon compound having the general formulae,

(V) $R_aSiH_{4-a}$ ;

(VI) $(H\overset{CH_3}{\underset{CH_3}{Si}}-)_2O(\overset{CH_3}{\underset{CH_3}{Si}}O)_w$ ;

(VII) $(R^i_3Si)_2O(R^{ii}_2SiO)_x(R^{iii}HSiO)_y$ ; and

(VIII) $[H\overset{CH_3}{\underset{CH_3}{Si}}O]_4Si$ ,

wherein, $R^i$, $R^{ii}$, $R^{iii}$, a, w, x, and y have the meanings defined above, in the presence of an organo complex of rhodium, wherein the hydrogen bonded directly to the

silicon atoms in the hydrogen-containing silicon compound are in a stoichiometric excess of at least 12 percent on a molar basis relative to the vinylic compound; and (B) separating and isolating the desired product from the reaction mixture, whereby the desired silyl ketene acetal is obtained essentially free of impurities.

As described above, the catalyst is an organo complex of rhodium such as tris(triphenylphosphine)rhodium chloride or the like. In whatever form the organo complex of rhodium is utilized, the rhodium concentration, relative to the vinylic compound should be at least 50 ppm on a molar basis.

The temperature during reaction of the vinylic compound and the hydrogen-containing silicon material is maintained in a range of 30° and 80°C. The lower temperature is a minimum to assure that a sufficient rate of reaction is achieved. The upper temperature is specified to minimize the polymerization of the vinylic compound.

The pressure in the reaction zone during reaction of the vinylic compound and the hydrogen-containing silicon material is at atmospheric pressure or above. As will be shown in the examples, pressures up to and including 200 psig do not negatively affect the instant invention.

The reaction between the vinylic compound and the hydrogen-containing silicon material is allowed to proceed for at least two hours.

To assure that a sufficient reaction rate and selectivity of the reaction toward the desired SKA are attained, the hydrogen-containing silicon material should be added to the vinylic compound and the rhodium catalyst in such a manner and at such a rate that the hydrogen-containing silicon material reacts and is not allowed to accumulate in the reaction mixture until the stoichiometric amount of the

hydrogen-containing silicon material relative to the vinylic compound is added.

As will be noted in the examples, conventional distillation will not separate the byproduct carbonyl adduct from the desired silyl ketene acetal. However, conversion of the carbonyl adduct to higher-boiling materials with an excess of the hydrogen-containing silicon material facilitates recovery of product that is greater than 95 weight percent silyl ketene acetal. Thus, the term "essentially free of impurities" will be used to denote a recovered SKA product that is at least 95 weight percent pure. If the reaction is carried out according to the teachings of the instant invention, conventional distillation column design can be specified to provide the capabilities to recover silyl ketene acetal at greater than 95 weight percent purity, with less than 1 weight percent of the carbonyl adduct as an impurity.

The hydrogen-containing silicon material may be of the general formula,

$$R_aSiH_{4-a}.$$

Hydrogen-containing silicon materials having this general formula can include $(CH_3)_3SiH$, $(CH_3)_2SiH_2$, $CH_3SiH_3$, $SiH_4$, and the like.

The hydrogen-containing silicon material may also have the general formula,

$$(H\overset{CH_3}{\underset{CH_3}{|}}\!\!Si-)_2O(\overset{CH_3}{\underset{CH_3}{|}}\!\!SiO)_w\ .$$

Hydrogen-containing silicon compounds having this general formula can include, for example, $[(CH_3)_2HSi]_2O$, $[(CH_3)_2HSi]_2O[(CH_3)_2SiO]_{1-25}$, and the like.

The hydrogen-containing silicon material may further have the general formula,

$$(R^{i}_{3}SiO)_{2}O(R^{ii}_{2}SiO)_{x}(R^{iii}HSiO)_{y}.$$

Hydrogen-containing silicon compounds having this general formula include, for example, $(CH_3)_3SiO[CH_3HSiO]Si(CH_3)_3$, $[(CH_3)_3SiO][(CH_3)_2SiO][CH_3HSiO][Si(CH_3)_3]$, $[(CH_3)_3SiO][CH_3HSiO]_{2-35}[Si(CH_3)_3]$, $[(CH_3)_3SiO][(CH_3)_2SiO]_{2-100}[CH_3HSiO]_{2-35}$, and the like.

The silyl ketene acetal may have the formula,

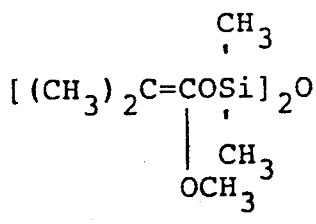

, or

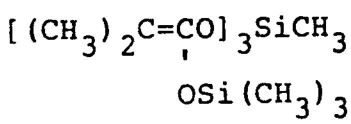

, or

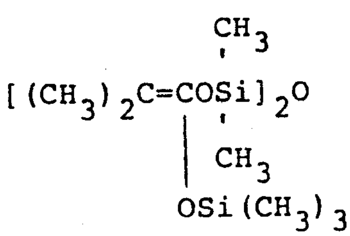

, or

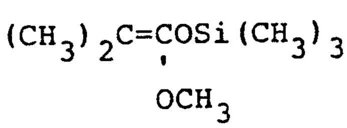

, or

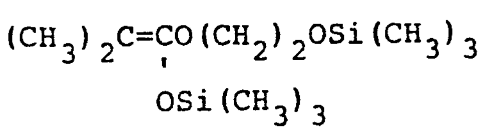

, or

$(CH_3)_2C{=}CO(CH_2)_2OCH(CH_3)OCH_2CH_3$ , or
$\quad\quad OSi(CH_3)_3$

$(CH_3)_2C{=}C[OSi(CH_3)_3]_2$ , or

$(CH_3)_3SiO[CH_3SiO]_{30}Si(CH_3)_3$ , or
$\quad\quad OC{=}C(CH_3)_2$
$\quad\quad OCH_3$

$(CH_3)_3SiO[CH_3SiO]_{30}Si(CH_3)_3$ , or
$\quad\quad OC{=}C(CH_3)_3$
$\quad\quad OSi(CH_3)_3$

$(CH_3)_3SiO[CH_3SiO]_{10}Si(CH_3)_3$ , or
$\quad\quad OC{=}C(CH_3)_3$
$\quad\quad OCH_3$

$(CH_3)_3SiO[CH_3SiO]_{10}Si(CH_3)_3$ , or
$\quad\quad OC{=}C(CH_3)_3$
$\quad\quad OSi(CH_3)_3$

$(CH_3)_3SiO[CH_3SiO]_3Si(CH_3)_3$ , or
$\quad\quad OC{=}C(CH_3)_3$
$\quad\quad OCH_3$

$$(CH_3)_3SiO[CH_3SiO]_3Si(CH_3)_3 \text{ , or the like.}$$
$$OC{=}C(CH_3)_3$$
$$OSi(CH_3)_3$$

The silyl ketene acetal may further have the general formula,

$$[(CH_3)_3Si]_2O[(CH_3)_2SiO]_x[CH_3SiO]_y,$$
$$Q$$

wherein Q is defined as being

$$-OC{=}C(CH_3)_2 \quad \text{or}$$
$$OCH_3$$

$$-OC{=}C(CH_3)_2 \ .$$
$$OSi(CH_3)_3$$

Silyl ketene acetals having this general formula can be

$$(CH_3)_3SiO[CH_3SiO]Si(CH_3)_3 \text{ , or}$$
$$OC{=}C(CH_3)_2$$
$$OCH_3$$

$$(CH_3)_3SiO[CH_3SiO]Si(CH_3)_3 \text{ , or}$$
$$OC{=}C(CH_3)_2$$
$$OSi(CH_3)_3$$

$$(CH_3)_3SiO[(CH_3)_2SiO][CH_3SiO]Si(CH_3)_3 \text{ , or}$$
$$OC{=}C(CH_3)_2$$
$$OCH_3$$

$$(CH_3)_3SiO[(CH_3)_2SiO][CH_3SiO]Si(CH_3)_3 \text{ , or}$$
$$OC{=}C(CH_3)_2$$
$$OSi(CH_3)_3$$

$$(CH_3)_3SiO[(CH_3)_2SiO]_{2-100}[CH_3SiO]_{2-35}Si(CH_3)_3 \text{ , or}$$
$$OC{=}C(CH_3)_2$$
$$OCH_3$$

$$(CH_3)_3SiO[(CH_3)_2SiO]_{2-100}[CH_3SiO]_{2-35}Si(CH_3)_3 \text{ , or}$$
$$OC{=}C(CH_3)_2$$
$$OSi(CH_3)_3$$

$$(CH_3)_3SiO[CH_3SiO]_{2-35}Si(CH_3)_3 \text{ , or}$$
$$OC{=}C(CH_3)_2$$
$$OCH_3$$

$$(CH_3)_3SiO[CH_3SiO]_{2-35}Si(CH_3)_3 \text{ , and the like.}$$
$$OC{=}C(CH_3)_2$$
$$OSi(CH_3)_3$$

In accordance with the instant invention, there is also disclosed a composition of matter comprising a silyl ketene acetal having the general formula,

$$\qquad\qquad CH_3 \qquad CH_3$$
$$[(CH_3)_2C{=}C{-}O{-}Si{-}]_2O[Si{-}O]_w,$$
$$O \qquad CH_3 \qquad CH_3$$
$$(CH_2)_v$$
$$Z$$

wherein Z, in each case, is independently selected from the group consisting of

(i) $-H$,

(ii) $-SiR^{iv}R^{v}R^{vi}$,

wherein $R^{iv}$, $R^{v}$, and $R^{vi}$ are independently selected from the group consisting of alkyl radicals containing 1 to 4 carbon atoms, aryl groups, and alkoxy groups containing 1 to 4 carbon atoms,

(iii) $-OSiR^{iv}R^{v}R^{vi}$,

(iv) $-CH(CH_3)_2$,

(v) 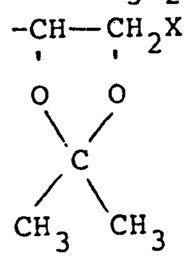 ,

wherein X is hydrogen or $-(CH_2)_{0-5}CH_3$,

(vi) $-(CH_2)_bOCH(CH_3)O(CH_2)_cCH_3$,,

wherein b and c each have a value of 1 to 4,

(vii)

O

$-Si[OCC=CH_2]_{3-(d+e+f)}][R_d^{vii}R_e^{viii}R_f^{ix}]$,

CH3

wherein $R^{vii}$, $R^{viii}$, and $R^{ix}$ are independently selected from and have the same definition as $R^{iv}$, $R^{v}$, and $R^{vi}$; and wherein d, e, and f each have a value of 0 or 1,

(viii) $-NR^{x}R^{xi}$,

wherein $R^{x}$ and $R^{xi}$ are independently selected from and have the same definition as $R^{iv}$, $R^{v}$, and $R^{vi}$,

(ix) $-Y$,

wherein Y is independently selected from a group consisting of $C_{1-20}$ alkyl, alkenyl,

or alkadienyl; $C_{6-20}$ cycloalkyl, aryl, alkaryl, or aralkyl; any of said groups containing one or more ether oxygen atoms within aliphatic segments thereof; and any of such groups containing one or more functional substituents that are unreactive under polymerizing conditions, and

(x) -N=C=O.

Compositions of matter having this general formula include, for example,

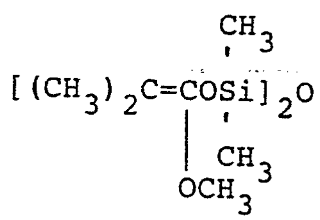

,

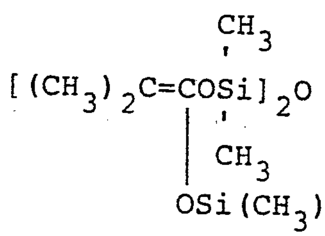

,

or the like.

The compositions disclosed can also have the general formula,

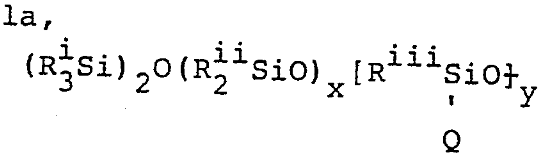

.

wherein $R^i$, $R^{ii}$, and $R^{iii}$ are each independently selected from alkyl groups containing 1 to 4 carbon atoms and aryl groups,

x has a value of 1 to 100,

y has a value of 1 to 35, and

Q is $-OC(O(CH_2)_vZ)=C(CH_3)_2$ ,

wherein, v has a value of 0, 1, or 2; and Z in each case is independently selected from the group consisting of

(i) -H

(ii) $-SiR^{iv}R^{v}R^{vi}$,

wherein $R^{iv}$, $R^{v}$, and $R^{vi}$ are independently selected from the group consisting of alkyl radicals containing 1 to 4 carbon atoms, aryl groups, and alkoxy groups containing 1 to 4 carbon atoms,

(iii) $-OSiR^{iv}R^{v}R^{vi}$,

(iv) $-CH(CH_3)_2$,

(v) 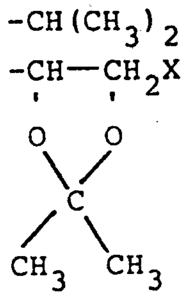

wherein X is hydrogen or $-(CH_2)_{0-5}CH_3$,

(vi) $-(CH_2)_bOCH(CH_3)O(CH_2)_cCH_3$,,

wherein b and c each have a value of 1 to 4,

(vii) $-Si[OC(O)C(CH_3)=CH_2]_{3-(d+e+f)}][R^{vii}_d R^{viii}_e R^{ix}_f]$,

wherein $R^{vii}$, $R^{viii}$, and $R^{ix}$ are independently selected from and have the same definition as $R^{iv}$, $R^{v}$, and $R^{vi}$; wherein d, e, and f each have a value of 0 or 1,

(viii) $-NR^{x}R^{xi}$,

wherein $R^{x}$ and $R^{xi}$ are independently selected from and have the same definition as $R^{iv}$, $R^{v}$, and $R^{vi}$,

(ix) -Y,

wherein Y is independently selected from a group consisting of $C_{1-20}$ alkyl, alkenyl, or alkadienyl; $C_{6-20}$ cycloalkyl, aryl, alkaryl, or aralkyl; any of said groups containing one or more ether oxygen atoms within aliphatic segments thereof; and any of such groups containing one or more functional substituents that are unreactive under polymerizing conditions,

(x) -N=C=O.

Compositions having this general formula can include, for example,

$(CH_3)_3SiO[CH_3SiO]_{30}Si(CH_3)_3$ ,
$OC=C(CH_3)_2$
$OCH_3$

$(CH_3)_3SiO[CH_3SiO]_{30}Si(CH_3)_3$ ,
$OC=C(CH_3)_2$
$OSi(CH_3)_3$

$(CH_3)_3SiO[CH_3SiO]_{10}Si(CH_3)_3$ ,
$OC=C(CH_3)_2$
$OCH_3$

$$(CH_3)_3SiO[CH_3SiO]_{10}Si(CH_3)_3 \, ,$$
$$OC{=}C(CH_3)_2$$
$$OSi(CH_3)_3$$

$$(CH_3)_3SiO[CH_3SiO]_3Si(CH_3)_3 \, ,$$
$$OC{=}C(CH_3)_2$$
$$OCH_3$$

$$(CH_3)_3SiO[CH_3SiO]_3Si(CH_3)_3 \, ,$$
$$OC{=}C(CH_3)_2$$
$$OSi(CH_3)_3$$

or the like.

The preferred mode of carrying out the instant invention is to add the hydrogen-containing silicon material to a mixture of the vinylic compound and an organo complex of rhodium. The rhodium concentration should be between 50 and 3000 ppm on a molar basis relative to the vinylic compound. More preferably, the rhodium concentration should be between 300 and 3000 ppm.

The excess of the hydrogen-containing silicon compound is preferably 15 to 25 molar percent relative to the vinylic compound.

To assure that a sufficient reaction rate and selectivity of the reaction toward the desired SKA are attained, the hydrogen-containing silicon material should be added to the vinylic compound and the rhodium catalyst in such a manner and at such a rate that the hydrogen-containing silicon material reacts and is not allowed to accumulate in the reaction mixture until the stoichiometric amount of the hydrogen-containing silicon material relative to the vinylic compound is added.

The reaction temperature is preferably maintained at 30° to 55°C.

The reaction is preferably operated at atmospheric pressure.

The reaction is preferably allowed to continue for 2 to 8 hours.

Distillation conditions are maintained so that processing temperatures are kept as low as possible to minimize degradation of the desired SKA. Specification of the distillation column (theoretical trays, etc.,) is known in the art and should be set to maintain a silyl ketene acetal purity of greater than 95 weight percent, with less than 1 weight percent by-product CA.

So that those skilled in the art can better appreciate and understand the instant invention, the following examples are given. These examples are presented to be illustrative and are not to be construed as limiting the instant invention as delineated in the claims.

Example 1

Two runs were made, using an organo complex of rhodium as a catalyst, to study the reaction of methylmethacrylate (MMA) with $(CH_3)_3SiH$ to produce the desired silyl ketene acetal (SKA), where

$$(CH_3)_2C=C(OCH_3)[OSi(CH_3)_3] = SKA.$$

200 grams (2 moles) of methylmethacrylate (MMA), 0.74 grams ($8x10^{-4}$ moles) of tris(triphenylphosphine)rhodium chloride, and 0.2 grams of methoxyhydroquinone were charged into a reactor with agitation, heating, and cooling capabilities. The reactor and contents were heated, with agitation, to the desired reaction temperature of 45°C. During the course of the reaction, the system was at essentially atmospheric pressure. Additionally, the reactor was continuously purged with nitrogen gas which contained 2 volume percent oxygen.

$(CH_3)_3SiH$ was stored as a liquid and fed to the reactor as a gas. 149 grams (2 moles) of $(CH_3)_3SiH$ were fed to the reactor over a period of 2 to 4 hours to maintain the reaction temperature at 45°C. This is Sample A.

A second reaction was made similarly to the above run. However, $(CH_3)_3SiH$ was fed as a liquid under pressure; and the reactor was pressurized with nitrogen gas containing 2 volume percent oxygen to 200 psig. This is Sample B.

Crude product samples were taken and analyzed via gas chromatography. Crude product analysis is expressed as weight percent $(CH_3)_3SiH$, MMA, SKA, the carbonyl adduct (CA), the vinyl adduct (VA), and other byproducts, where

$$CH_2=C(CH_3)CH(OCH_3)[OSi(OCH_3)_3] = CA$$
$$(CH_3)_3SiCH_2CH(CH_3)COOCH_3 = VA.$$

The results of these analyses are tabulated as Table 1:

Table 1

| Sample | Press,psig | MMA | SKA | CA | VA | Other |
|---|---|---|---|---|---|---|
| A | 0 | 3.1 | 81.9 | 11.6 | 0 | 3.4 |
| B | 200 | 5.3 | 80.5 | 10.4 | 0.4 | 3.4 |

In both of the above runs, a stoichiometric amount of $(CH_3)_3SiH$ was added to the reaction mixture. The second run (carried out at 200 psig) was continued by adding an additional 20 mole percent $(CH_3)_3SiH$ over a period of 2 hours. The reaction was allowed to continue for another 3 hours. This is Sample C. Table 2 summarizes the result of gas chromatographic analysis of the resulting sample as weight percent of the reactants, product, and by-products:

Table 2

| Sample | $(CH_3)_3SiH$ | MMA | SKA | CA | VA | Other |
|---|---|---|---|---|---|---|
| C | 5.8 | 0 | 77.9 | 2.4 | 0.2 | 13.7 |

The above results demonstrate a general procedure to produce silyl ketene acetals. These above results also demonstrate what would be expected by using prior art

conditions of reacting a stoichiometric amount of $(CH_3)_3SiH$ with MMA in the presence of an organophosphorous rhodium catalyst. These results further demonstrate that increased pressure has no apparent negative effect upon the results of this reaction. Finally, the above results demonstrate that excess $(CH_3)_3SiH$ will react with the carbonyl adduct to form higher-boiling byproducts. With the samples prepared with stoichiometric proportions of reactants, it is calculated that a minimum of approximately 12 mole percent excess of $(CH_3)_3SiH$ would be required to consume the carbonyl adduct that is present.

Example 2

A mixture of 55 grams (0.55 moles) of methylmethacrylate (MMA) and 0.21 grams ($2.1x10^{-04}$ mole) tris(triphenylphosphine)rhodium chloride was charged into a pressure reactor fitted for agitation of the reactants. The reactor was pressurized to 100 psig with nitrogen gas. The reactor was heated with agitation to 30°C.

A 10 milliliter portion of $(CH_3)_3SiH$ was charged into the reaction vessel via pressure from a liquid reservoir. The reactor was allowed to cool again to 30°C. The remainder of the $(CH_3)_3SiH$ was added in portions, with external cooling, to maintain the reactor temperature at or near 30°C. A total of 75 milliliters (48 grams or 0.64 moles) of $(CH_3)_3SiH$ was added to the reactor. The molar excess of $(CH_3)_3SiH$ added to the reactor was 16%. Samples of the crude reactor product were taken after the addition of 20, 35,and 75 milliliters of $(CH_3)_3SiH$. These samples are designated Sample A, Sample B, and Sample C, respectively. The results of the gas chromatographic analyses of the crude product samples are tabulated below as a function of $(CH_3)_3SiH$ addition and the percent of stoichiometric $(CH_3)_3SiH$ added. The results are

tabulated as Table 3. The notations used in this table are the same as those used in Example 1.

Table 3

| Sample | $(CH_3)_3SiH$ | %Stoich | MMA | SKA | CA | VA | Other |
|---|---|---|---|---|---|---|---|
| A | 20ml | 31 | 44.3 | 43.1 | 5.5 | 0.8 | 6.3 |
| B | 35ml | 54 | 17.6 | 61.3 | 8.0 | 1.0 | 12.1 |
| C | 75ml | 116 | 4.8 | 69.5 | 8.8 | 0.7 | 16.2 |

The crude product, with excess $(CH_3)_3SiH$, was held at the reaction temperature. Samples were taken at intervals after the addition of the final portion of $(CH_3)_3SiH$ and were analyzed by gas chromatography. These samples are designated Sample D and Sample E, respectively. The results of these analyses as a function of time after completion of $(CH_3)_3SiH$ addition are summarized in Table 4:

Table 4

| Sample | Time,hr | SKA | CA | VA | Other |
|---|---|---|---|---|---|
| D | 1.7 | 69.4 | 6.9 | 2.2 | 21.5 |
| E | 6.0 | 69.6 | 0.1 | 3.7 | 26.6 |

The above results further demonstrate the utility of using excess $(CH_3)_3SiH$ to react the undesirable carbonyl adduct (CA) to higher-boiling materials to facilitate subsequent separation and recovery of the desired silyl ketene acetal.

Example 3 (Not Within Scope of the Instant Invention).

1657 grams (16.5 moles) methylmethacrylate (MMA), 6.3 grams (0.0066 moles) of tris(triphenylphosphine)rhodium chloride and 0.2 gram of methoxyhydroquionone were charged into an agitated pressure reactor. The reactor and its contents were pressurized with nitrogen gas to 100 psig. The reactor had provisions for heating and cooling. The reactor was heated to 30°C. with rapid agitation.

$(CH_3)_3SiH$ was fed as a liquid under pressure. A total of 2250 milliliters (1437 grams or 19.4 moles) were fed to the reactor. An initial 200 milliliter charge of $(CH_3)_3SiH$ was added in approximately 1 minute. Once the reactor temperature was brought back to 30°C., the remainder of the $(CH_3)_3SiH$ was added at a rate of approximately 36 milliliters/hour.

Crude samples were taken from the reactor for a period of 24 hours after the addition of the $(CH_3)_3SiH$. These samples were designated as Sample A, Sample B, Sample C, and Sample D, respectively. Table 5 below summarizes gas chromatographic analyses (stated in weight percent by component) of the crude product samples, listing the reactants (MMA and $(CH_3)_3SiH$), the desired SKA product, and CA and other by-products (notation as defined in Example 1) at various times after the addition of $(CH_3)_3SiH$:

Table 5

| Sample | Time,hr | $(CH_3)_3SiH$ | MMA | SKA | CA | Other |
|---|---|---|---|---|---|---|
| A | 3 | 14.2 | 67.2 | 3.9 | 1.0 | 15.0 |
| B | 6 | 4.5 | 50.3 | 11.5 | 4.3 | 29.4 |
| C | 12 | 7.8 | 21.8 | 35.4 | 7.4 | 27.6 |
| D | 24 | 4.4 | 8.6 | 46.0 | 0 | 40.9 |

The above results demonstrate that rapid addition of $(CH_3)_3SiH$ to the reaction mixture results in the accumulation of excess $(CH_3)_3SiH$ in the reactor. The reaction proceeds slowly and significant quantities of byproducts other than CA are formed. The formation of these byproducts is undesirable in our attempts to maximize the final yield of the SKA product.

Example 4

Two distillation runs, using distillation techniques as practiced in the art, were made to separate the desired silyl ketene acetal of the chemical formula,

$(CH_3)_2C=C(OCH_3)[OSi(CH_3)_3]$ = SKA,

from the crude reaction mixture.

The distillation column utilized was a packed column, 4 feet tall and 3 inches in diameter and packed with 1/4 inch ceramic saddles. Distillation conditions were as follow:

Pressure - 10 to 30 mm Hg

Pot Temperature - Up to 100°C.

Reflux Ratio - 3/1 to total reflux

The primary impurity of concern was the very close-boiling carbonyl or 1,2 adduct of the chemical formula,

$CH_2=C(CH_3)CH(OCH_3)[OSi(CH_3)]$ = CA.

In the first distillation run on a reaction crude product not prepared according to the instant invention, approximately 60% of the pot charge was taken overhead as product. The results of this run are summarized in Table 6. Composition of the starting crude product feed and the product cuts as determined by gas chromatographic analyses are expressed as weight percents:

Table 6

(Not Within the Scope of the Instant Invention)

| | %SKA | %CA | %Other |
|---|---|---|---|
| Crude Feed | 73.9 | 3.8 | 22.3 |
| Product Cut | | | |
| #1 | 88.5 | 5.4 | 6.1 |
| #2 | 92.9 | 5.8 | 1.2 |
| #3 | 93.6 | 5.9 | 0.5 |

A second distillation run was made with the above described distillation column using similar pressure, temperature, and reflux conditions as above. The reaction crude product had been prepared according to the instant invention in which the CA impurity had been reacted to a higher-boiling impurity with excess $(CH_3)_3SiH$. Table 7

summarizes the gas chromatographic analyses of various cuts during the distillation:

Table 7

| | %SKA | %CA | %Other |
|---|---|---|---|
| Crude Feed | 70.3 | 0.3 | 29.4 |
| Overhead Cuts | | | |
| #1 | 56.2 | 0.2 | 43.6 |
| #2 | 98.2 | 0.2 | 1.6 |
| #3 | 94.3 | 0.04 | 5.7 |

Cut #2 was the final product and accounted for approximately 58 weight percent of the reaction crude product.

This example demonstrates the difficulty in separating the desired silyl ketene acetal (SKA) product from the 1,2 adduct (CA) by conventional distillation. Additionally, this example demonstrates the ability to recover high-purity SKA from crude product in which CA has been converted to higher-boiling by-products with excess $(CH_3)_3SiH$, according to the instant invention.

Example 5

1 gram of methylmethacrylate or MMA (0.01 moles), 1.1 gram of $(CH_3)_3SiH$ (0.015 moles), and 0.15 grams of a 3 weight percent solution of $RhCl_3.(n-Bu_2S)_3$ ($7.2x10^{-5}$ moles Rh) in toluene were charged into a sealed, agitated reactor. The reaction was allowed to occur at ambient temperature.

Samples of the reactor contents were taken periodically, and the samples were analyzed by gas chromatography. These samples are designated Samples A, B, C, D, and E, respectively. Table 8 is a summary of the analyses as a function of reaction time. The desired silyl ketene acetal (SKA) and the undesired byproduct carbonyl adduct (CA) are reported on a weight percent basis. Again, the notation used in Example 1 is utilized.

Table 8

| Sample | Time,hr | %SKA | %CA | %Other |
|---|---|---|---|---|
| A | 0 | 0 | 0 | 100 |
| B | 0.5 | 72.7 | 9.0 | 18.3 |
| C | 2 | 80.8 | 11.5 | 7.7 |
| D | 5.2 | 75.8 | 9.5 | 14.7 |
| E | 23 | 70.7 | 6.5 | 22.8 |

These results were surprising in that the CA had not reacted in the presence of the excess $(CH_3)_3SiH$. A second run using the same procedure gave similar results.

To further study the reaction of CA with excess $(CH_3)_3SiH$ the following run was made. 1.5 grams of a mixture of a silyl ketene acetal (SKA) and its carbonyl adduct (CA) of the respective formulae,

$(CH_3)C=C(OCH_3)[OSi(CH_3)_3]$ = SKA

$CH_2=C(CH_3)CH(OCH_3)[OSi(CH_3)_3]$ = CA,

the SKA and CA being present in a mole ratio of 16.7 SKA to 1 CA (0.0086 moles of combined SKA and CA), 1.2 grams of $(CH_3)_3SiH$ (0.017 moles), and 0.05 grams of a 3 weight percent solution of $RhCl_3.(n\text{-}Bu_2S)_3$ in toluene ($2.4x10^{-5}$ moles Rh) were charged into a sealed, agitated reactor. The reaction was allowed to proceed at ambient temperature.

The reactor was sampled after 1.25 hours, and the sample was analyzed by gas chromatography. Analysis showed that all of the CA material had been reacted to higher molecular weight material. The SKA content remained relatively unchanged.

The above results demonstrate that $RhCl_3.(n\text{-}Bu_2S)_3$ is a potential catalyst for the preparation of silyl ketene acetals via the hydrosilylation of an ester of methacrylic acid.

Example 6

1 gram (0.005 moles) of 4-methyl-3,5-dioxyheptyl methacrylate (DHMA), approximately 0.5 gram (0.007 moles) of $(CH_3)_3SiH$, and approximately 0.005 gram of ($5x10^{-6}$ moles) of tris(triphenylphosphine)rhodium chloride were charged into a sealed, agitated reactor. The reaction was allowed to proceed at ambient temperature. Samples were taken periodically and analyzed by gas chromatography. These samples are designated as Samples A, B, C, and D, respectively.

Table 9 is a summary of the above analyses as a function of reaction time. Results of these analyses are reported as weight percent unreacted DHMA, the desired silyl ketene acetal (SKA), and byproduct carbonyl adduct (CA) and others in the reaction crude, where

$$(CH_3)_2C=C[OCH_2CH_2OCH(CH_3)OCH_2CH_3][OSi(CH_3)_3] = SKA$$

and

$$CH_2=C(CH_3)CH[OCH_2CH_2OCH(CH_3)OCH_2CH_3][OSi(CH_3)_3] = CA.$$

Table 9

| Sample | Time,hr | %DHMA | %SKA | %CA | %Other |
|---|---|---|---|---|---|
| A | 0 | 100 | 0 | 0 | 0 |
| B | 4 | 88.4 | 7.1 | 0 | 4.5 |
| C | 24 | 50.5 | 22.7 | 0 | 26.8 |
| D | 39 | 0 | 18.3 | 0 | 81.7 |

The above results demonstrate the preparation of a silyl ketene acetal from a methacrylic acid ester beside methylmethacrylate.

Example 7

A run was made to prepare a crude silyl ketene acetal from the reaction of $(CH_3)_3SiH$ and an ester of methacrylic acid with the chemical formula,

$$CH_2=C(CH_3)COOCH_2CH_2OSi(CH_3)_3 = HEMA.$$

0.5 grams (0.002 moles) HEMA, approximately 0.5 grams (0.007 moles) of $(CH_3)_3SiH$, and 0.001 grams ($1x10^{-6}$

moles) of tris(triphenylphosphine)rhodium chloride were charged into a sealed, agitated reactor. The reaction was allowed to proceed at ambient temperature, and samples were taken periodically to be analyzed by gas chromatography. These samples were designated Samples A, B, and C, respectively. Table 10 is a summary of these analyses as a function of reaction time, where

$(CH_3)_2C{=}C[OCH_2CH_2OSi(CH_3)_3][OSi(CH_3)_3]$ = SKA,

$CH_2{=}C(CH_3)CH[OCH_2CH_2OSi(CH_3)_3][OSi(CH_3)_3]$ = CA.

Table 10

| Sample | Time, hr | % HEMA | % SKA | % CA | % Other |
|---|---|---|---|---|---|
| A | 0.5 | 100 | 0 | 0 | 0 |
| B | 1.5 | 87.6 | 12.4 | 0 | 0 |
| C | 4 | 91.8 | 8.2 | 0 | 0 |

The above results demonstrate the preparation of a silyl ketene acetal from another ester of methacrylic acid.

Claims:

1. A process to facilitate improved recovery of a high-purity silyl ketene acetal material of the general formula selected from the group consisting essentially of

(I) 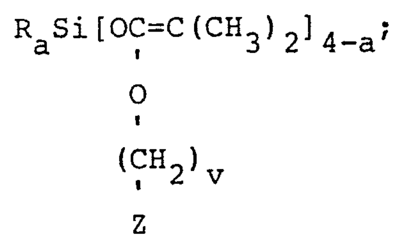

(II) 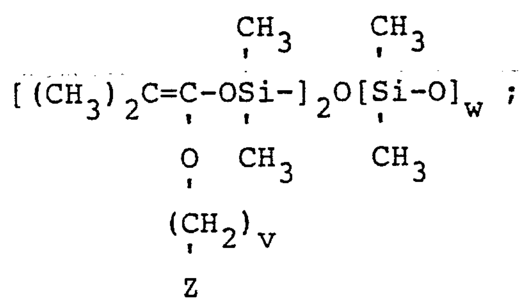

(III) 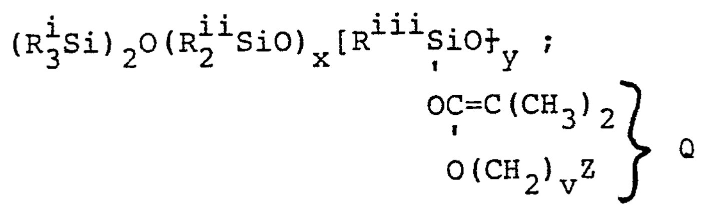

(IV) 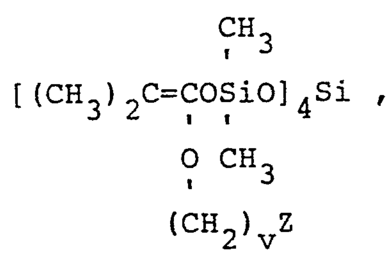

wherein R is selected from the group consisting of alkyl radicals containing 1 to 4 carbon atoms, aryl groups, and alkoxy groups containing 1 to 4 carbon atoms;

<u>a</u> has a value of 0, 1, 2, or 3;
<u>v</u> in each case has a value of 0, 1, 2, or 3;
<u>w</u> has a value of 0 to 25;
<u>x</u> has a value of 1 to 100;
<u>y</u> has a value of 1 to 35;
Q is — $OC{=}C(CH_3)_2$;
$O(CH_2)_vZ$

$R^i$, $R^{ii}$, and $R^{iii}$ are each independently selected from the group consisting of alkyl groups containing 1 to 4 carbon atoms and aryl groups; Z in each case is independently selected from the group consisting of

(i) -H,

(ii) -OH,

(iii) $-SiR^{iv}R^vR^{vi}$,
wherein $R^{iv}$, $R^v$, and $R^{vi}$ are independently selected from the group consisting of alkyl radicals containing 1 to 4 carbon atoms, aryl groups, and alkoxy groups containing 1 to 4 carbon atoms,

(iv) $-OSiR^{iv}R^vR^{vi}$,

(v) $-CH(CH_3)_2$,

(vi) 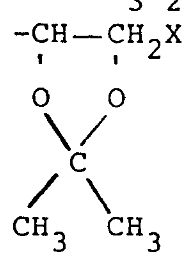 ,
wherein X is hydrogen or $(CH_2)_{0-5}(CH_3)$,

(vii) $-(CH_2)_bOCH(CH_3)O(CH_2)_cCH_3$,
wherein b and c each have a value of 1 to 4,

(viii) $-Si[OC(=O)C(CH_3)=CH_2]_{3-(d+e+f)}[R_d^{vii}R_e^{viii}R_f^{ix}]$,

wherein $R^{vii}$, $R^{viii}$, and $R^{ix}$ are independently selected from and have the same definition as $R^{iv}$, $R^{v}$, and $R^{vi}$; and wherein d, e, and f each have a value of 0 or 1,

(ix) $-NR^{x}R^{xi}$,

wherein $R^{x}$ and $R^{xi}$ are independently selected from and have the same definition as $R^{iv}$, $R^{v}$, and $R^{vi}$,

(x) -Y,

wherein Y is independently selected from a group consisting of $C_{1-20}$ alkyl, alkenyl, or alkadienyl; $C_{6-20}$ cycloalkyl, aryl, alkaryl, or aralkyl; any of said groups containing one or more ether oxygen atoms within aliphatic segments thereof; and any of such groups containing one or more functional substituents that are unreactive under polymerizing conditions,

(xi) -N=C=O,

said process comprising (A) contacting a vinylic compound, selected from a group consisting essentially of (i) methacrylic acid and (ii) esters of methacrylic acid having the general formula,

$$CH_2=CH(CH_3)C(=O)O(CH_2)_vZ,$$

wherein v and Z are as defined above,

with a hydrogen-containing silicon compound having the general formulae,

(V) $R_aSiH_{4-a}$ ;

$$\begin{array}{ll} & CH_3 \quad\; CH_3 \\ (VI) & (HSi-)_2O(SiO)_w \;\; ; \\ & CH_3 \quad\; CH_3 \end{array}$$

(VII) $(R^i_3Si)_2O(R^{ii}_2SiO)_x(R^{iii}HSiO)_y$; and

$$\begin{array}{ll} & CH_3 \\ (VIII) & [HSiO]_4Si \\ & CH_3 \end{array}$$

wherein, $R^i$, $R^{ii}$, $R^{iii}$, a, w, x, and y have the meanings defined above,

in the presence of an organo complex of rhodium, wherein the hydrogen bonded directly to the silicon atoms in the hydrogen-containing silicon compound are in a stoichiometric excess of at least 12 percent on a molar basis relative to the vinylic compound; and (B) separating and isolating the desired product from the reaction mixture, whereby the desired silyl ketene acetal is obtained essentially free of impurities.

2. The process according to claim 1, wherein the organo complex of rhodium is tris(triphenylphosphine) rhodium chloride.

3. The process according to claim 1, wherein the vinylic compound is methylmethacrylate, the hydrogen-containing silicon compound is $(CH_3)_3SiH$, the catalyst is tris(triphenylphoshine)rhodium chloride and the rhodium concentration is greater than 50 ppm on a molar basis relative to methylmethacrylate, the molar excess of $(CH_3)_3SiH$ relative to methylmethacrylate is greater than 12%, $(CH_3)_3SiH$ is added at such a rate that $(CH_3)_3SiH$ is not allowed to accumulate in the reactor until the stoichiometric amount is reached, the reaction temperature is in the range of 40° to 75°C., the reaction pressure is at least atmospheric, the reaction time is at least 2 hours, and the silyl ketene acetal material,

$-(CH_3)_2C{=}C(OCH_3)(OSiCH_3)-$,

is separated and isolated by distillation.

4. A composition of matter comprising an organosilicon ketene acetal having the general formula,

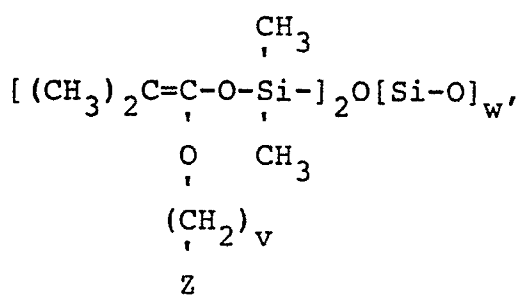

wherein v has a value of 0, 1, 2 or 3; and w has a value of 0 to 25; and wherein Z, in each case, is independently selected from the group consisting of

(i) -H

(ii) $-SiR^{iv}R^{v}R^{vi}$,
wherein $R^{iv}$, $R^{v}$, and $R^{vi}$ are independently selected from the group consisting of alkyl radicals containing 1 to 4 carbon atoms, aryl groups, and alkoxy groups containing 1 to 4 carbon atoms,

(iii) $-OSiR^{iv}R^{v}R^{vi}$,

(iv) $-CH(CH_3)_2$,

(v) 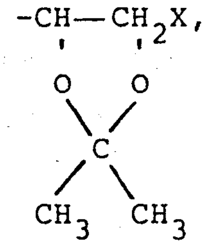

wherein X is hydrogen or $-(CH_2)_{0-5}CH_3$,

(vi) $-(CH_2)_bOCH(CH_3)O(CH_2)_cCH_3$,

wherein b and c each have a value of 1 to 4,

(vii) 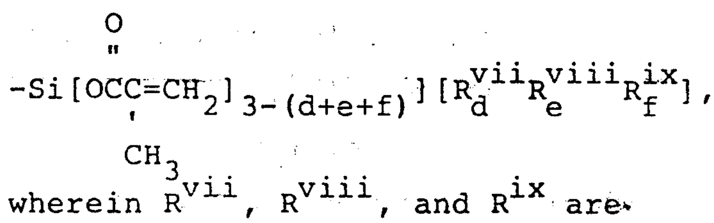

wherein $R^{vii}$, $R^{viii}$, and $R^{ix}$ are independently selected from and have the same definition as $R^{iv}$, $R^{v}$, and $R^{vi}$; wherein d, e, and f each have a value of 0 or 1,

(viii) $-NR^{x}R^{xi}$,

wherein $R^{x}$ and $R^{xi}$ are independently selected from and have the same definition as $R^{iv}$, $R^{v}$, and $R^{vi}$,

(ix) -Y,

wherein Y is independently selected from a group consisting of $C_{1-20}$ alkyl, alkenyl, or alkadienyl; $C_{6-20}$ cycloalkyl, aryl, alkaryl, or aralkyl; any of said groups containing one or more ether oxygen atoms within aliphatic segments thereof; and any of such groups containing one or more functional substituents that are unreactive under polymerizing conditions,

(x) -N=C=O.

5. A composition of matter comprising an organosilicon ketene acetal having the general formula,

$(R^{i}_{3}Si)_{2}O(R^{ii}_{2}SiO)_{x}[R^{iii}SiO]_{y}$,

(with Q attached to the Si of the $R^{iii}SiO$ unit)

wherein $R^{i}$, $R^{ii}$, and $R^{iii}$ are each independently selected from alky groups containing 1 to 4 carbon atoms and aryl groups,

x has a value of 1 to 100,

y has a value of 1 to 35, and

Q is $-OC=C(CH_3)_2$ ,

(with $O(CH_2)_vZ$ attached to the first C)

wherein, v has a value of 0, 1, or 2; Z in each case is independently selected from the group consisting of

(i) -H

(ii) $-SiR^{iv}R^{v}R^{vi}$,
wherein $R^{iv}$, $R^{v}$, and $R^{vi}$ are independently selected from the group consisting of alkyl radicals containing 1 to 4 carbon atoms, aryl groups, and alkoxy groups containing 1 to 4 carbon atoms,

(iii) $-OSiR^{iv}R^{v}R^{vi}$,

(iv) $-CH(CH_3)_2$,

(v) 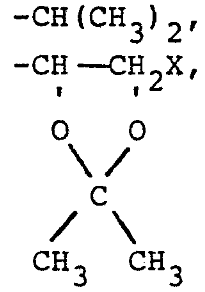
wherein X is hydrogen or $-(CH_2)_{0-5}CH_3$,

(vi) $-(CH_2)_bOCH(CH_3)O(CH_2)_cCH_3$,,

wherein b and c each have a value of 1 to 4,

(vii) $-Si[OC(=O)C(CH_3)=CH_2]_{3-(d+e+f)}][R_d^{vii}R_e^{viii}R_f^{ix}]$,

wherein $R^{vii}$, $R^{viii}$, and $R^{ix}$ are independently selected from and have the same definition as $R^{iv}$, $R^{v}$, and $R^{vi}$; wherein d, e, and f each have a value of 0 or 1,

(viii) $-NR^xR^{xi}$,

wherein $R^x$ and $R^{xi}$ are independently selected from and have the same definition as $R^{iv}$, $R^{v}$, and $R^{vi}$,

(ix) -Y,

wherein Y is independently selected from a group consisting of $C_{1-20}$ alkyl, alkenyl, or alkadienyl; $C_{6-20}$ cycloalkyl, aryl, alkaryl, or aralkyl; any of said groups containing one or more ether oxygen atoms within aliphatic segments thereof; and any of such groups containing one or more functional substituents that are unreactive under polymerizing conditions,

(x) -N=C=O.

6. A composition as claimed in claim 4 having the formula,

$$
\begin{array}{l}
\qquad\qquad\quad CH_3 \\
[(CH_3)_2C{=}C\,OSi]_2O. \\
\qquad\quad |\qquad CH_3 \\
\qquad\quad OCH_3
\end{array}
$$

7. A composition as claimed in claim 4 having the formula,

$$
\begin{array}{l}
\qquad\qquad\quad CH_3 \\
[(CH_3)_2C{=}C\,OSi]_2O. \\
\qquad\quad |\qquad CH_3 \\
\qquad\quad OSi(CH_3)_3
\end{array}
$$

8. A composition as claimed in claim 5 having the formula,

$$
\begin{array}{l}
(CH_3)_3SiO[CH_3SiO]_{30}Si(CH_3)_3. \\
\qquad\qquad\quad OC{=}C(CH_3)_2 \\
\qquad\qquad\qquad | \\
\qquad\qquad\quad OCH_3
\end{array}
$$

9. A composition as claimed in claim 5 having the formula,

$$
\begin{array}{l}
(CH_3)_3SiO[CH_3SiO]_{30}Si(CH_3)_3. \\
\qquad\qquad\quad OC{=}C(CH_3)_2 \\
\qquad\qquad\qquad | \\
\qquad\qquad\quad OSi(CH_3)_3
\end{array}
$$

10. A composition as claimed in claim 5 having the formula,

$$(CH_3)_3SiO[CH_3SiO]_{10}Si(CH_3)_3.$$

$$OC{=}C(CH_3)_2$$

$$OCH_3$$